(19) Europäisches Patentamt

European Patent Office

Office européen des brevets

(11) **EP 1 615 431 A2**

(12) **EUROPEAN PATENT APPLICATION**

(43) Date of publication:
**11.01.2006 Bulletin 2006/02**

(51) Int Cl.:
***H04N 5/76*** *(2006.01)*

(21) Application number: **05254280.0**

(22) Date of filing: **07.07.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Jeong, Jeong-joo**<br>**504-1405 Purun-maeul**<br>**Seongnam-si**<br>**Gyeonggi-do (KR)** |
| (30) Priority: **07.07.2004 KR 2004052559** | (74) Representative: **Robinson, Ian Michael et al**<br>**Appleyard Lees,**<br>**15 Clare Road**<br>**Halifax HX1 2HY (GB)** |
| (71) Applicant: **SAMSUNG ELECTRONICS CO., LTD.**<br>**Suwon-si,**<br>**Gyeonggi-do (KR)** | |

(54) **Digital video recording and reproducing apparatus having data recovery function and method thereof**

(57)     A video recording and reproducing apparatus and a method having a data recovery function, wherein the method includes recording a temporary recording information file concerned with recovery information while recording data, file system and recording information on a disc. The temporary recording information file is read upon disc reproduction to conduct a recovery operation. The temporary recording information file area has a temporary storage location at a section (innermost circumference portion, middle portion or outermost circumference portion of the disc) in very close proximity to a position where data is recorded on the disc. Audio/video is recorded and at the same time, file system information and reproduced recording information are recorded on the disc by use of a remaining time during recording without using memory recording power breakdown recovery information, so that recorded video is recovered even after power breakdown without any dedicated operation, reducing design cost and simplifying circuit construction.

FIG. 5

EP 1 615 431 A2

**Description**

The present invention relates to a digital video recording and reproducing apparatus having a function of data recovery and a method thereof. More particularly, the present invention relates to a digital video recording and reproducing apparatus having a function of data recovery and a method thereof, which upon power breakdown during a recording operation, can recover recorded data.

A digital video recording and reproducing apparatus for recording a broadcasting signal and reproducing the recorded signal, has been developed to support the use of various video sources, such as satellite broadcasting signals, network broadcasting signals through a cable broadcasting or the internet, and reaching the step in which data is stored or reproduced in or from optical media such as compact disc-read only memory (CD-ROM) or digital versatile disc (DVD). Such optical media has no-degradation of image quality even after some use time and can store high quality multi-channel (for example, 5.1 channels video and audio data), so that it has now fast replaced conventional analog video media. Since the optical media such as DVD for storing in general few Mbytes to Gbytes of data, recently, the video recording/reproducing apparatus enlarges its function from simple recording or reproducing function to easy vast-data storage or reading function by adapting a hard disc driver (HDD) of a high capacity memory device.

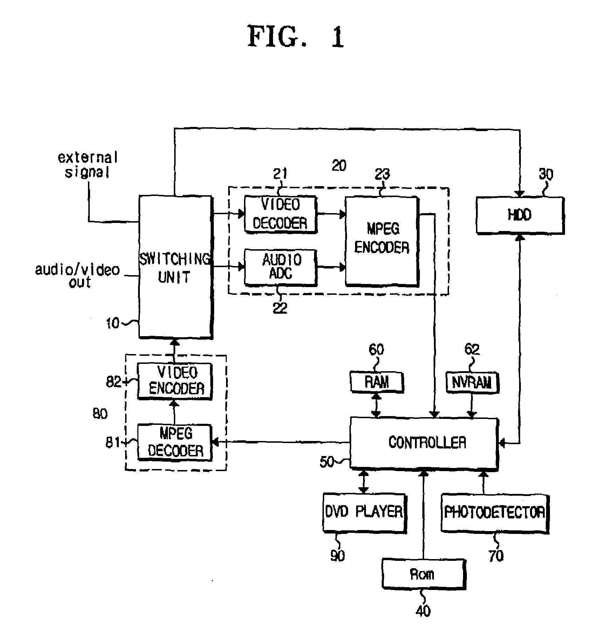

Hereinafter, a conventional DVD/HDD video recording and reproducing apparatus will be explained with reference to Figure 1. The DVD/HDD video recording and reproducing apparatus includes a switching unit 10, a moving picture experts group (MPEG) encoder unit 20, an HDD 30, a Flash ROM 40, a controller 50, a random access memory (RAM) 60, a nonvolatile RAM (NVRAM) 62, a photodetector 70, a digital signal processor 80 and a DVD player 90.

The switching unit 10 is one to which various external video data/sound data sources are inputted and from which video data source from the encoder is outputted to an external (for example, a monitor screen and so on). The switching unit 10 receives external signals such as component or composite signals inputted from broadcasting signals and video appliance (not shown) and selectively connects the same with functional blocks in the video recording/reproducing apparatus. For example, if an external signal applied from an external device such as a video appliance is a component or composite signal, the external signal is applied to a MPEG encoder unit 20.

The MPEG encoder unit 20 includes a video decoder 21, an audio analog to digital converter (ADC) 22 and an MPEG encoder 23, by which analog type sources among video data sources applied from the switching unit 10 are analog-to-digital converted and compressed into an MPEG format (for example, MPEG-2 format). Generally, video data in MPEG format is provided in compressed form in order to reduce storage allocation when being stored in a memory medium such as the HDD 30.

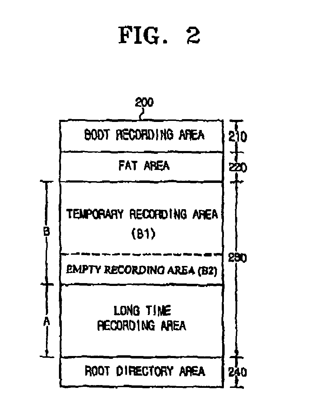

The HDD 30 is constructed so that MPEG formatted video data and sound data are stored or read in file type in or from a data recording area thereof. Hereinafter, a physical data structure of HDD will be explained in detail with reference to Figure 2.

An HDD 200 includes a boot recording area 210, a file allocation table (FAT) area 220, a data recording area 230 and a root directory area 240.

The boot recording area 210 is one on which information on a physical structure of the HDD 200 such as information on drive partition is recorded.

The FAT area 220 is one on which state information is recorded on which object data to be recorded is positioned at any cluster of the data recording area 230. Herein, the cluster is a recording unit including at least two sectors, and large capacity object data to be recorded is divided and recorded in a plurality of clusters. However, although one file is dividedly allocated to the plural clusters, the clusters do not always continuously exist but may be scattered all over the hard disc. In this case, positions of the plural clusters associated with one file are managed at FAT.

The data recording area 230 is one on which object data to be recorded is practically recorded and which includes a long time recording area A and an unrecording area B.

The long time recording area A is a nonvolatile recording area that object data to be recorded (for example, an A/V signal) is recorded in a file type for a long time in accordance with a recording order from a user. A file of object data recordable for a long time can be edited in conformity with the user's taste.

The unrecording area B refers to an area on which any data is not recorded, and in which a temporary recording area B1 is adaptively allocated thereto in order for a time delay looking and listening function (hereinafter, called "time shift function"), and the rest area excluding the temporary recording area B1 remains as an empty recording area B2.

To be more specific, the temporary recording area B1 is a volatile recording area for temporarily recording the program now viewed and listened for time shift function, so that the program received from outside can be temporarily recorded thereto in a first in first out (FIFO) manner.

The temporary recording area B1 is allocated to a part of the unrecording area B in order to temporarily record the received program by "one hour". If the selected buffer time is "auto" mode, the temporary recording area B1 is allocated to all of the unrecording area B in order to temporarily record the received program by a capacity of the unrecording area B. Also, if the selected buffer time is "off" mode, the temporary recording area B1 is not allocated at all to the unrecording area B so that the received program cannot be temporarily recorded.

Further, if the program being currently reproduced is under temporary record to the allocated temporary recording area B1, location information of the initial cluster to which the reproduced program is temporarily recorded, i.e., the record start position of the unrecording area B1, is recorded to the root directory area 240.

Furthermore, if a long time record command is given to the program temporarily recorded to the temporary recording area B1, the program is long time-recorded to a portion of the long time recording area A where data is not recorded.

The root directory area 240 is an area where information on attribute, location and so on of record-objected data long time and temporarily recorded to the data recording area 230 are recorded. Attribute information of a file produced by the controller 50 includes file name or title, file capacity, recorded date/time and so on of object data to be recorded, and location information includes record start address and record end address of the object data to be recorded. Herein, whenever an edit operation of the file such as recording, deleting and the like is conducted, status information of FAT area 220 and attribute information and location information of the root directory area 240 are updated.

The ROM 40 is a program memory where a program of the controller is written.

The controller 50 stores MPEG data outputted from the MPEG encoder 20 in the hard disc drive 30 and transfers video data/sound data stored in the HDD 30 to the digital signal processor 80 to read it. When the DVD is reproduced, the controller 50 reads information on the DVD title from disc information file area to record the information to the root directory area of HDD 30.

The RAM 60 loads a file when the controller 50 edits the same stored in HDD 30. That is, the file stored in HDD 30 is edited not directly by the controller but by the RAM 60 and is then re-stored in HDD 30.

The NVRAM 62 is a nonvolatile memory which is formed into a static RAM (SRAM) or a flash ROM and the like and which stores data even in power breakdown (power off) so as to memorize recovery information required after power breakdown (upon power on). That is, the NVRAM 62 stores video information (video record format and file management system) upon being recorded, and upon power off, compares recorded information in disc with the file management system to check whether power breakdown occurs forcedly during recording due to a power stoppage and the like thus to recover the recorded information.

The photodetector 70 receives a control signal generated from a remote controller (not shown) or a set key (not shown) provided to the video recording/reproducing apparatus for controlling the apparatus (for example, channel change, volume control, video quality control and so on) and transfers the control signal to the controller 50.

The digital signal processor 80 receives video data in MPEG format stored in HDD 30 via the controller 50, decodes the same and transforms the same into video format (for example, National Television System Committee/Phase Alternation Line; NTSC/PAL). The transformed signal can be reproduced by a video display appliance such as a television set.

A DVD player 90 reads video data and audio data from a DVD disc to store the read data in HDD 30, to transfer the same to the digital signal processor 80 so as to reproduce, or to record signal transferred from MPEG encoder unit 20.

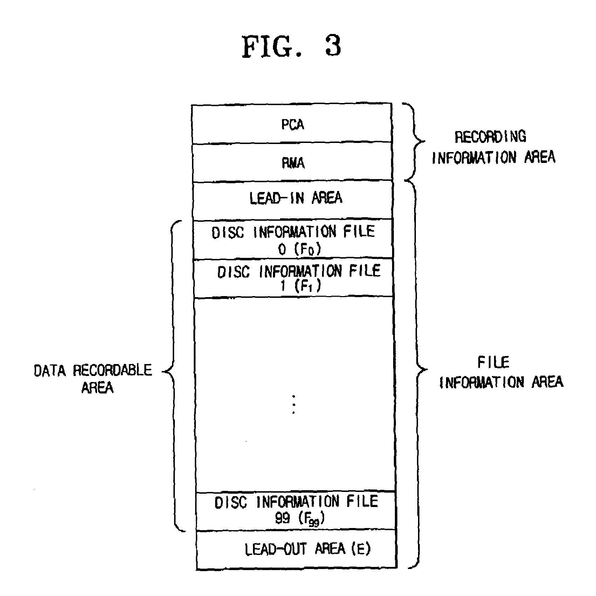

Hereinafter, a general data structure of a DVD disc will be explained with reference to Figure 3. Figure 3 is a view of a general data structure of DVD disc, in which viewing an internal structure thereof from a center of the disc, a mechanical clamping area, a recording information area (RIA) including a power calibration area (PCA) used for seeking proper record power and a recording management area (RMA) for temporarily storing information currently recorded, and a file information area are dividedly defined. The file information area is divided into a lead-in area, a data recordable area, and a lead-out area.

On the lead-in area, upon completion of recording, information on table of contents (TOC) is recorded thereto. Files 1 to 99 (F1 to F99) of the data recording area practically contain movies or music video and the like, and information file 0 (F0) of the disc called disc information file contains file system information. Various reference information on the data contained in files 1 to 99 (F1 to F99) of DVD disc is contained therein. Particularly, on the disc information file area (F0), information on DVD title and the location of video data corresponding to I-frame among video data contained in the files 1 to 99 (F1 to F99), is contained. Accordingly, using location information of video data corresponding to the I-frame and contained in the disc information file (F0), a disc scanning can be performed.

In data information processing, a DVD optical pickup device (not shown) reads TOC information on the lead-in area of the DVD disc and information on disc information file (F0) area and transfers the same to decoder unit 80. The controller 50 receiving information of the disc information file (F0) area decoded, stores the information of the disc information file (F0) area in an internal memory (not shown). Herein, information of the disc information file (F0) area includes one for DVD title as described above, so that reading operation thereof can be performed.

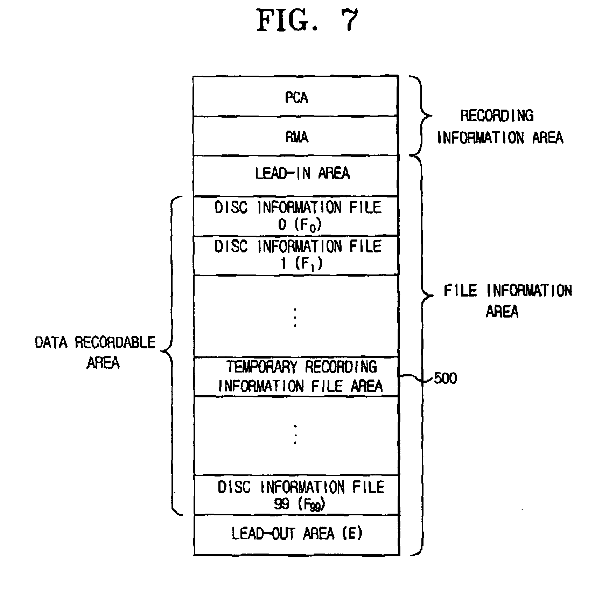

In reproducing operation of the above DVD/HDD combo system, when a DVD disc (writable media) is loaded to the DVD player 90, the optical pickup device (not shown) of the DVD player 90 reads disc TOC information, information from a disc information file (F0) area and transfers the same to the digital signal processor 80 and other information (See Figure 7). The digital signal processor 80 detects TOC information to provide it to the controller 50, while MPEG decoder 81 decodes information from the disc information file (F0) area to provide it to the controller 50, so that the controller 50 stores information from the disc information file (F0) area in the internal memory (not shown). Herein, information from the disc information file (F0) area includes a DVD title information as described above.

The DVD player 90 then performs a general reproduction for the disc. As the DVD player performs the general reproduction, audio and video data contained in the files 1 to 99 (F1 to F99) of the disc 100 are successively read and provided to the digital signal processor 80, so that the digital signal processor 80 performs a demodulation to the audio and video data read to output a demodulated signal to the switching unit 10.

The controller 50 controls the switching unit 10 to record an inputted signal to the temporary recording area B1 for a time shift function of HDD 30 and at the same time outputs the signal outside.

In the DVD/HDD video recording/reproducing apparatus as constructed above, two items of information should be required upon video recording and reproducing. The first item of information is concerned with an information file, for example, a digital video recording format (DVD-VR) or a DVD video format (DVD-V Mode) and the like, concerning how recorded video information is recorded and reproduced. The file includes information in which information on recorded video and on a reproduction method thereof, is recorded. That is, the file contains important information essentially required for reproduction, such as the number, length, edit information, play list, video/sound compression method and so on of a recorded program, which are recorded in a file type. If such information is corrupted or is not recorded successively, corresponding video cannot be reproduced. Recorded video and a reproduction information file is recorded in a file type in a memory media. A file system is provided to manage the file.

The second item of information is concerned with the file system. The file system manages the file in the memory media such as an optical disc or HDD so as to manage empty space of the disc. The file system records video information as logical information in the practical location of a physical memory media and contains very important practical information including various volume descriptors, file location/size/attribute information, free space management information (space bit map) and so on. Generally, as the same ones as the file system in the memory media, there are FAT in HDD, ISO9660 in CD-ROM, universal disc format (UDF) in DVD-RAM and the like.

Particularly, UDF is a file system standard for optical media developed by the Optical Storage Technology Association (OSTA), in which multi-media discs are used for storing MPEG audio and video streams.

The information file and the file system are essential for reproducing a recorded video signal. Generally, in an optical recording appliance, these two items of information are not recorded during video recording but can be recorded after recording. The reason of this is because an audio/video bitstream can be recorded in real time so that in order to record a file generated during recording, the audio/video bitstream should be temporarily interrupted. In this case, overflow of a buffer is generated. To prevent this overflow, an information file is recorded after audio/video recording. If the recording operation is thus not normally completed during recording due to a power breakdown and the like, this information cannot be recorded in the disc, so that video cannot be reproduced.

To solve this problem, the conventional apparatuses are operated such that the information is recorded in an NVRAM such as an SRAM during recording, and upon power ON, the recording information and the file system in the disc are compared with each other. If it is determined that a power breakdown occurs based on the comparison result, the recording information prior to power breakdown is recovered and recorded in the disc.

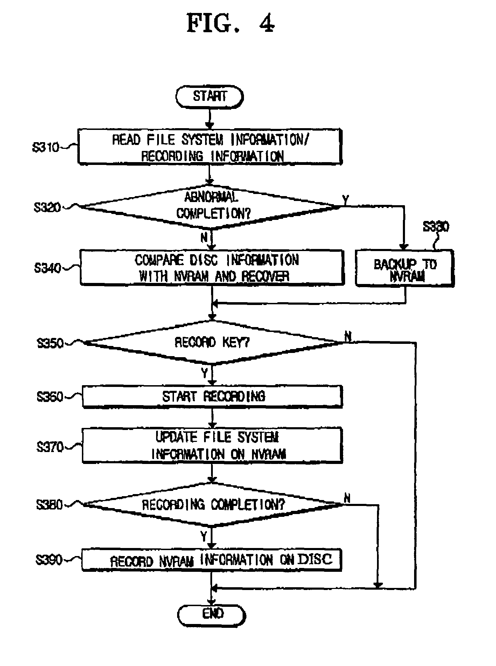

Hereinafter, the recording operation thereof will be explained with reference to Figure 4. The controller 50 reads file system information and recording information on a disc at a system memory (S310) and checks whether the recording of the file system information and the recording information is normally completed (S320). In this case, it can be generally achieved by checking whether an update flag of the NVRAM 62 is set. That is, if the update flag of the NVRAM 62 is not set, recording of the disc is not interrupted by a power breakdown, so that a recovery operation is not required. However, if the update flag of the NVRAM 62 is set, it is determined that an interruption is generated, so that a recovery operation is required. When the recording is not normally completed in operation S320, the file system information and the recording information in the system memory are backed up in the NVRAM 62 (S330). When the recording is not normally completed in operation S320 (that is, when an update flag is set), the file system information and the recording information read from disc are compared with the information stored in the NVRAM 62, thus to recover a different portion, so that recording information recorded prior to power breakdown is recovered, and an update flag set by the power breakdown is released (S340). The above operations are performed every power ON.

Then, when a key for record is inputted (S350), the controller 50 sets an update flag of the NVRAM 62 and recording starts (S360). The recording is conducted while the file system information and the recording information are updated on the NVRAM 62 (S370). When the recording is normally completed (S380), the controller 50 records updated file system information and recording information on the disc and releases the update flag of the NVRAM 62 as well (S390). When the recording is abnormally completed in operation S380 due to power breakdown and the like, the completion is conducted in a state that the update flag of the NVRAM 62 is set and upon power ON, data is recovered by operations S310, S320 and S340.

However, in the prior art described above, in order to solve a problem due to power breakdown, the file system information and the recording information are recorded on NVRAM, and upon power ON, the recording information and the file system information on the disc are compared with each other, so that if comparison result indicates a forced power OFF, the recording information prior to power breakdown is recovered and recorded on the disc. Accordingly, in order to return the above two items of file information to a state before power breakdown, 300 Kbytes and 512 Kbytes of memories are required for the file system and the recording information, respectively, which causes a problem in that design cost is added or circuit structure is complicated.

According to the present invention there is provided an apparatus and method as set forth in the appended claims. Preferred features of the invention will be apparent from the dependent claims, and the description which follows.

The present invention aims to address at least some of the above problems and/or disadvantages. An aspect of the present invention provides a video recording and reproducing apparatus and method having a data recovery function, which, records audio/video without using a memory and also records file system information and produced recording information on a disc using a remaining time during recording of audio/video, whereby recorded video is recovered without a separate operation upon power breakdown, reducing design cost.

In order to achieve the above-described aspect of the present invention, there is provided a video recording and reproducing apparatus having a data recovery function, the apparatus comprising a recording device for recording a temporary recording information file concerned with recovery information while recording data, file system and recording information on a disc; and a controller for controlling the video recording and reproducing apparatus so as to read the temporary recording information file upon reproducing data on the disc to conduct a recovery operation.

According to an aspect of the present invention, the temporary recording information file may be recorded on a predetermined temporary recording information file area on the disc, the temporary recording information file area having a temporary storage location at a section (innermost circumference portion, middle portion or outermost circumference portion of the disc) in very close proximity to a position where data is recorded on the disc, which area is defined under a condition satisfying the following equation;

$$Br/Rr > T1s + Tw + T2s$$

where "Br" refers to remaining buffer size, "Rr" to recording bitrate, "T1s" to a seek time for recording recording information, "T2s" to a returning seek time for recording bitstream, and "Tw" to information record time.

The temporary recording information file may include a data file defining size recording information file or a recorded video reproduction method, file system information for managing file and empty space of the disc, recovery check information indicating whether the recovery is required, and location information of the temporary recording information file recorded last during recording.

Recovery check information may be provided to set a recording information update flag (recording_info_updated_flag) such that when data is recorded on the disc, the recording information update flag is set, and when the recording is normally completed, the recording information update flag is released.

Accordingly, the controller checks whether the recording information update flag of the temporary recording information file is set upon reproduction of the disc, and should perform a recovery operation when the recording information update flag is set. Herein, the recovery is performed such that file system information and recording information read from the disc are compared with location information stored in the temporary recording information file area to recover a different portion therebetween.

In accordance with another aspect of the present invention, there is provided a method for data recovery of a video recording and reproducing apparatus, the method includes: recording a temporary recording information file concerned with recovery information while the recording data, the file system and the recording information are recorded on a disc; and reading the temporary recording information file upon disc reproduction to conduct a recovery operation.

The temporary recording information file may be recorded on a predetermined temporary recording information file area on the disc, the predetermined temporary recording information file area having a temporary storage location at a section (innermost circumference portion, middle portion or outermost circumference portion of the disc) in very close proximity to a position where data is recorded on the disc, which area is defined under a condition satisfying the following equation;

$$Br/Rr > T1s + Tw + T2s$$

where "Br" refers to remaining buffer size, "Rr" to recording bitrate, "T1s" to a seek time for recording recording information, "T2s" to a returning seek time for recording bitstream, and "Tw" to information record time.

The temporary recording information file may include a data file defining size recording information file or a recorded video reproduction method, file system information for managing file and empty space of the disc, recovery check information indicating whether the recovery is required, and location information of the temporary recording information file recorded last during recording.

Recovery check information may be provided to set a recording information update flag (recording_info_updated_flag) such that when data is recorded on the disc, the recording information update flag is set, and when the recording is normally completed, the recording information update flag is released.

The recovery operation may include: reading the temporary recording information file upon disc reproduction; checking whether or not recording information update flag of the temporary recording information file is set; and if the recording information update flag is set, implementing a data recovery operation.

The data recovery may be implemented such that the file system information and the recording information read from the disc are compared with location information stored in the temporary recording information file area to recover different portions therebetween.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:

Figure 1 is a block diagram schematically showing a DVD/HDD combo system;

Figure 2 is a view of a physical data structure of an HDD;

Figure 3 is a view of a general data structure of a DVD disc;

Figure 4 is a flow chart showing an operation of a DVD/HDD combo system;

Figure 5 is a block diagram schematically showing a DVD/HDD combo system according to an embodiment of the present invention;

Figure 6 is a flow chart for explaining a recording process according to an embodiment of the present invention; and

Figure 7 is a view of a data structure of a DVD disc according to an embodiment of the present invention.

The present invention relates to a video recording and reproducing apparatus and method, which enable a record-interrupted file to be recovered by use of a recording disc currently in use. Hereinafter, an embodiment of the present invention will be described in detail with reference to the drawings hereto attached.

In the following description, the same drawing reference numerals are used for the same elements even in different drawings. The specific matters defined in the description such as a detailed construction and elements are provided to assist in a comprehensive understanding of the invention. Thus, it is apparent that the present invention can be carried out without those specific matters. Also, well-known functions or constructions are not described in detail since this would obscure the invention with unnecessary detail.

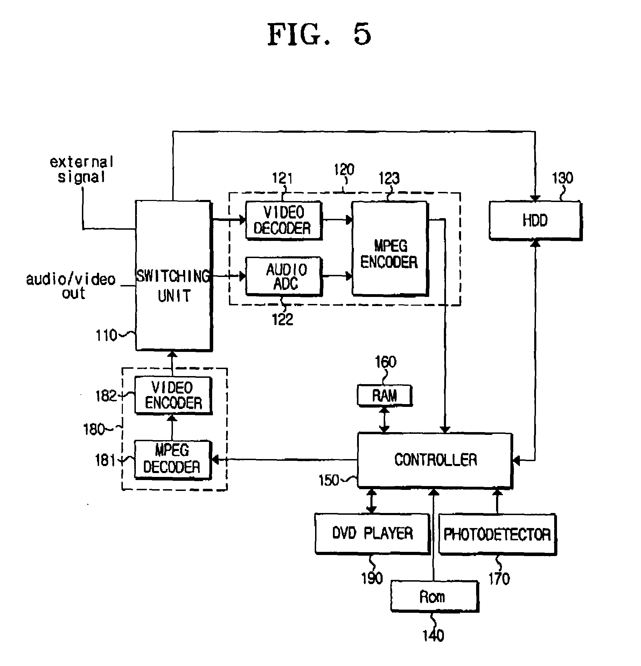

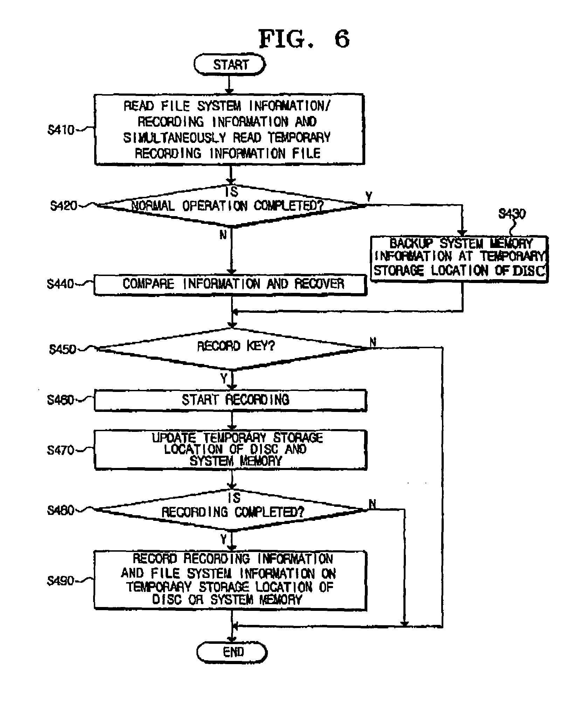

Figure 5 is a block diagram schematically showing a DVD/HDD combo system according to an embodiment of the present invention, Figure 6 is a flow chart for explaining a recording process according to an embodiment of the present invention, and Figure 7 is a view of a data structure of a DVD disc according to an embodiment of the present invention. Referring to the drawings, since a video recording and reproducing apparatus having a data recovery function of the present invention has the same construction as that of the prior art in which NVRAM 62 is omitted, a detailed explanation of the construction will be directed only to a controller 150 which has a different function.

The controller 150 stores MPEG data outputted from an MPEG encoder unit 120 in HDD 130, or transfers video data/sound data stored in the HDD 130 to a digital signal processor 180 so as to read them. Upon DVD reproduction, the controller 150 reads file system information and recording information from a file information area and RMA of a recording information area in a disc to compare them with a temporary recording information file 500 recorded on a temporary recording location of the disc, thus to perform DVD reproduction or to recover information on the disc. Upon recording on a DVD, the temporary recording information file including the recording information file and the file system information, is updated and recorded in the temporary recording information file in the temporary storage location on the disc. In this case, a predetermined location on the disc should be defined as a temporary recording location at a section in very close proximity to a location currently recorded. This is because simultaneous updating during recording of recording information to both a system memory and a disc, may cause overflow of an encoding buffer. That is to say, in order to record recording information while recording bitstream on the disc, recording information should be recorded at a predetermined location before the generation of overflow of the encoding buffer. On a recording time for recording information, a seek time for moving into a recording location must be a very important factor, so as to satisfy a condition on the above-defined temporary recording location, seek time and seek distance should be minimized. The condition on the above-defined temporary recording location satisfies the following [Equation 1];

[Equation 1]

$$Br/Rr > T1s + Tw + T2s$$

where "Br" refers to remaining buffer size, "Rr" to recording bitrate, "T1s" to a seek time for recording information, "T2s" to a returning seek time for recording bitstream, and "Tw" to information record time.

In [Equation 1] , "T1s" and "T2s" are variables and the rest "Br", "Rr" and "Tw" are variables fixed in hardware. Thus, since "T1s" and "T2s" have the large correlativity with the seek distance, in order to minimize seek distance, the temporary recording information file to be recorded on the disc should be located at an innermost circumference portion, a middle portion or an outermost circumference portion of the disc as to minimize the seek distance based on a location currently recorded.

In the temporary recording information file, the recording information file, the file system, recovery check information and location information of the temporary recording information file last-recorded during recording, are recorded. Particularly, recovery check information is used for determining whether, upon disc reproduction, recovering data interrupted by power breakdown should be conducted. According to an aspect of the present invention, recovery check information may be provided by use of a recording information update flag (recording_info_updated flag), such that the controller 150 sets its recording information update flag (recording_info_updated_flag) when the temporary recording information file is recorded, and releases the same when the recording is completed. That is, the operation is implemented such that if the recording information update flag is set, temporary recording information is continuously recorded, and if not, temporary recording information is not recorded.

Under control of the controller 150, a DVD player 190 reads video data and audio data from a DVD disc to store the read data in HDD 130, to transfer the same to the digital signal processor 180 so as to reproduce, or to record a signal transferred from MPEG encoder unit 120. Also, upon recording data on the disc, it is operated as a recording device for simultaneously recording a temporary recording information file concerned with recovery information, while recording file system and recording information.

A data structure of a DVD disc according to an embodiment of the present invention has the same construction as that of the prior art, except that the present invention provides a temporary recording information file area 500 for recording a temporary recording information file on a data recordable area, so that a detailed explanation of the construction will be omitted. As shown in Figure 7, on the temporary recording information file area 500, the temporary recording information file is recorded when data is recorded on the disc under the control of the controller 150, in which the file includes a recording information file, a file system, a recording information update flag (recording_info_updated_flag) and location information of the temporary recording information file last-recorded during recording.

Hereinafter, an operation of a video recording and reproducing method having a data recovery function according to another aspect of the present invention will be explained with reference to the above-described video recording and reproducing apparatus and to Figure 6.

Upon the loading of the disc, the controller 150 reads file system information and recording information from a data recording area and a recording information area, respectively, of the disc to a system memory, and at the same time, reads temporary recording information from the temporary recording information file area 500 of the disc (S410). The controller determines whether a recording information update flag is set to check whether the recording of file system information and recording information is normally completed or not due to power breakdown (S420). That is, if a temporary recording information update flag of the temporary recording information file is released, the recording of the disc is normally completed without interruption by power breakdown, so that a recovery operation is not required. However, if it is set, it is determined to be an interruption of a recording process due to power breakdown, thus to perform a recovery operation. In the operation S420, if it is normally completed, file system information and recording information of the system memory are backed up on the temporary recording information file area 500 on the disc (S430), and if it is abnormally completed (that is, if update flag is set), file system information and recording information read from the disc are compared with temporary recording information stored in the temporary recording information file area 500 to recover a different portion therebetween, so as to recover recording information recorded immediately before the occurrence of a power breakdown and to release a recording information update flag set by a power breakdown (S440). The operations are may be performed every power ON.

Then, when a key for recording is inputted (S450), the controller 150 sets a recording information update flag in the temporary recording information file area 500 on the disc so as to control the system to record data on the data recording area of the disc (S460). The recording is conducted such that file system information and recording information are updated in the system memory while the temporary recording information file in the temporary recording information file area 500 is simultaneously updated (S470). That is, file system information and recording information, which had been recorded in NVRAM in the prior art, are recorded in a portion allocated to the data recording area of the disc without using a separate memory. Herein, the temporary recording information file area 500 recording temporary recording information defines a temporary storage location at a section in very close proximity to a location currently recorded. The reason has been previously described before.

When the recording is completed during the operation S470 (S480) , the controller 150 records updated file system information and recording information in the temporary recording information file of the system memory or temporary recording information file area 500, on the disc and at the same time, releases the recording information update flag set (S490).

In the operation 3480, if the recording is abnormally completed due to, for example, a power breakdown, the completion is performed in a state that the recording information flag is not yet released. Accordingly, upon the recovery from the power breakdown, the controller 150 determines that an abnormal completion has occurred because the recording information update flag is set in the operation S420, to compare file system information and recording information read from the disc with temporary recording information stored in the temporary recording information file area 500, so as to recover the different portion therebetween.

As described before, according to the video signal recording and reproducing method having a data recovery function, an audio/video signal is recorded and at the same time, file system information and reproduced recording information are recorded on the disc by use of remaining time during recording without using memory, so that a recorded video signal is recovered even with a power breakdown, without separate operation, thereby reducing design cost and simplifying circuit construction.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method for data recovery of a video recording and reproducing apparatus for recording and reproducing data on a disc, the method comprising:

   recording a temporary recording information file having recovery information while recording data, file system and recording information on the disc; and
   reading the temporary recording information file (500) upon disc reproduction to perform a recovery operation.

2. The method as claimed in claim 1, wherein the temporary recording information file is recorded on a temporary recording information file area.

3. The method as claimed in claim 2, wherein the temporary recording information file area has a temporary storage location at a section in very close proximity to a position where data is recorded on the disc.

4. The method as claimed in claim 2, wherein the temporary recording information file area is defined under a condition satisfying the following equation:

$$Br/Rr > T1s + Tw + T2s$$

   where "Br" refers to remaining buffer size, "Rr" to recording bitrate, "T1s" to a seek time for recording recording information, "T2s" to a returning seek time for recording bitstream, and "Tw" to information record time.

5. The method as claimed in claim 2, wherein the temporary recording information file area is located at an innermost circumference portion, a middle portion or an outermost circumference portion of the disc.

6. The method as claimed in any preceding claim, wherein the temporary recording information file includes a recording information file of data file defining size or reproduction method of recorded video, file system information for managing file and empty space of the disc, recovery check information indicating whether the recovery is required, and location information of the temporary recording information file recorded last during recording.

**7.** The method as claimed in claim 6, wherein the recovery check information is a recording information update flag (recording_info_updated_flag).

**8.** The method as claimed in claim 7, wherein the recording operation further comprises, setting the recording information update flag when data is recorded on the disc, and releasing the recording information update flag when the recording is normally completed.

**9.** The method as claimed in claim 8, wherein the recovery operation further comprises:

reading the temporary recording information file upon disc reproduction:
checking whether the recording information update flag of the temporary recording information file is set; and
if the recording information update flag is set, implementing a data recovery operation.

**10.** The method as claimed in claim 9, wherein the implementing a data recovery operation is implemented such that file system information and recording information read from the disc are compared with location information stored in the temporary recording information file area to recover a different portion therebetween.

**11.** A video recording and reproducing apparatus for recording and reproducing data on a disc, the apparatus having a data recovery function, the apparatus comprising:

a recording device (190) recording a temporary recording information file having recovery information (500) while recording data, file system and recording information on the disc; and
a controller (150) controlling the video recording and reproducing apparatus to read the temporary recording information file (500) upon reproducing data on the disc to perform a recovery operation.

**12.** The apparatus as claimed in claim 11, wherein the temporary recording information file (500) is recorded on a temporary recording information file area defined on the disc.

**13.** The apparatus as claimed in claim 12, wherein the temporary recording information file area has a temporary storage location at a section near to a position where data is recorded on the disc.

**14.** The apparatus as claimed in claim 12, wherein the temporary recording information file area is defined under a condition satisfying following equation:

$$Br/Rr > T1s + Tw + T2s$$

where "Br" refers to remaining buffer size, "Rr" to recording bitrate, "T1s" to a seek time for recording recording information, "T2s" to a returning seek time for recording bitstream, and "Tw" to information record time.

**15.** The apparatus as claimed in claim 12, wherein the temporary recording information file area is located at an innermost circumference portion, a middle portion or an outermost circumference portion of the disc.

**16.** The apparatus as claimed in any of claims 11 to 15, wherein the temporary recording information file (500) includes a data file defining size recording information file or a recorded video reproduction method, file system information for managing file and empty space of the disc, recovery check information indicating whether or not the recovery is required, and location information of the temporary recording information file (500) recorded last during recording.

**17.** The apparatus as claimed in claim 16, wherein the recovery check information is a recording information update flag (recording_info_updated_flag).

**18.** The apparatus as claimed in claim 17, wherein the recording device (190) is operated such that when data is recorded on the disc, the recording information update flag is set, and when the recording is normally completed, the recording information update flag is released.

**19.** The apparatus as claimed in claim 18, wherein the controller (150) checks whether the recording information update flag of the temporary recording information file (500) is set upon reproduction of the disc, and if the recording information update flag is set, performs a recovery operation.

**20.** The apparatus as claimed in claim 19, wherein the controller (150) is operated such that file system information and recording information read from the disc are compared with location information stored in the temporary recording information file area to recover a different portion therebetween.

# FIG. 1

# FIG. 2

200

| | |
|---|---|
| BOOT RECORDING AREA | 210 |
| FAT AREA | 220 |
| TEMPORARY RECORDING AREA (B1) | |
| EMPTY RECORDING AREA (B2) | 230 |
| LONG TIME RECORDING AREA | |
| ROOT DIRECTORY AREA | 240 |

B

A

# FIG. 3

| | |
|---|---|
| PCA | RECORDING INFORMATION AREA |
| RMA | |
| LEAD-IN AREA | |
| DISC INFORMATION FILE 0 ($F_0$) | |
| DISC INFORMATION FILE 1 ($F_1$) | |
| ⋮ | FILE INFORMATION AREA |
| DISC INFORMATION FILE 99 ($F_{99}$) | |
| LEAD-OUT AREA (E) | |

DATA RECORDABLE AREA

# FIG. 4

START

S310 — READ FILE SYSTEM INFORMATION/
RECORDING INFORMATION

S320 — ABNORMAL
COMPLETION?

Y → S330 — BACKUP TO NVRAM

N

S340 — COMPARE DISC INFORMATION
WITH NVRAM AND RECOVER

S350 — RECORD KEY? — N

Y

S360 — START RECORDING

S370 — UPDATE FILE SYSTEM
INFORMATION ON NVRAM

S380 — RECORDING COMPLETION? — N

Y

S390 — RECORD NVRAM INFORMATION ON DISC

END

# FIG. 5

# FIG. 6

```
                    ┌─────────┐
                    │  START  │
                    └────┬────┘
                         │
         ┌───────────────▼────────────────┐
         │  READ FILE SYSTEM INFORMATION/ │
S410 ─── │   RECORDING INFORMATION AND    │
         │  SIMULTANEOUSLY READ TEMPORARY │
         │   RECORDING INFORMATION FILE   │
         └───────────────┬────────────────┘
                         │
                    ◇ IS              Y
S420 ──── ◇ NORMAL OPERATION COMPLETED? ◇ ──────────┐
                    ◇                                │
                         │ N                        │    S430
                         │              ┌────────────▼──────────────┐
                         │              │  BACKUP SYSTEM MEMORY      │
                         │              │ INFORMATION AT TEMPORARY   │
                         │              │ STORAGE LOCATION OF DISC   │
                         │              └────────────┬──────────────┘
         ┌───────────────▼────────────────┐         │
S440 ─── │  COMPARE INFORMATION AND RECOVER│         │
         └───────────────┬────────────────┘         │
                         │◄──────────────────────────┘
                         │
                    ◇                          N
S450 ────── ◇        RECORD KEY?         ◇ ──────────┐
                    ◇                                │
                         │ Y                         │
         ┌───────────────▼────────────────┐         │
S460 ─── │        START RECORDING         │         │
         └───────────────┬────────────────┘         │
                         │                           │
         ┌───────────────▼────────────────┐         │
         │  UPDATE TEMPORARY STORAGE      │         │
S470 ─── │   LOCATION OF DISC AND         │         │
         │      SYSTEM MEMORY             │         │
         └───────────────┬────────────────┘         │
                         │                           │
                    ◇ IS                  N          │
S480 ─── ◇    RECORDING COMPLETED?   ◇ ─────────┐   │
                    ◇                            │   │
                         │ Y                     │   │
         ┌───────────────▼────────────────┐     │   │
         │  RECORD RECORDING INFORMATION  │     │   │
S490 ─── │  AND FILE SYSTEM INFORMATION ON│     │   │
         │ TEMPORARY STORAGE LOCATION OF  │     │   │
         │   DISC OR SYSTEM MEMORY        │     │   │
         └───────────────┬────────────────┘     │   │
                         │◄─────────────────────┘   │
                         │◄─────────────────────────┘
                    ┌────▼────┐
                    │   END   │
                    └─────────┘
```

# FIG. 7